(19) **Europäisches Patentamt**
**European Patent Office**
**Office européen des brevets**

(11) **EP 1 570 667 B1**

(12) **EUROPEAN PATENT SPECIFICATION**

(45) Date of publication and mention
of the grant of the patent:
**14.03.2007 Bulletin 2007/11**

(51) Int Cl.:
*H04N 7/173* (2006.01)    *H04N 5/00* (2006.01)

(21) Application number: **03769786.9**

(86) International application number:
**PCT/IB2003/005078**

(22) Date of filing: **06.11.2003**

(87) International publication number:
**WO 2004/054263 (24.06.2004 Gazette 2004/26)**

(54) **MULTI-POINT SERVICE INJECTION IN A BROADCAST SYSTEM**

MEHRPUNKT-ZUFÜGUNG VON DIENSTEN IN EINEM RUNDFUNKSYSTEM

INJECTION DE SERVICE MULTIPOINT DANS UN SYSTEME DE RADIODIFFUSION

(84) Designated Contracting States:
**AT BE BG CH CY CZ DE DK EE ES FI FR GB GR HU IE IT LI LU MC NL PT RO SE SI SK TR**

(30) Priority: **06.12.2002 EP 02080093**

(43) Date of publication of application:
**07.09.2005 Bulletin 2005/36**

(73) Proprietor: **Koninklijke Philips Electronics N.V.**
**5621 BA Eindhoven (NL)**

(72) Inventors:
• **VERHAEGH, Wilhelmus, F., J.**
**NL-5656 AA Eindhoven (NL)**
• **RIETMAN, Ronald**
**NL-5656 AA Eindhoven (NL)**
• **KORST, Johannes, H., M.**
**NL-5656 AA Eindhoven (NL)**

(74) Representative: **Gravendeel, Cornelis**
**Philips**
**Intellectual Property & Standards**
**P.O. Box 220**
**5600 AE Eindhoven (NL)**

(56) References cited:
**WO-A-01/22725**         **US-A- 5 898 456**
**US-A- 6 078 952**

• **CHAN S-H G: "OPERATION AND COST OPTIMIZATION OF A DISTRIBUTED SERVERS ARCHITECTURE FOR ON-DEMAND VIDEO SERVICES" IEEE COMMUNICATIONS LETTERS, IEEE SERVICE CENTER, PISCATAWAY,US, US, vol. 5, no. 9, September 2001 (2001-09), pages 384-386, XP001107976 ISSN: 1089-7798**

**Description**

FIELD OF THE INVENTION

The invention relates a broadcast system for broadcasting data to a plurality of broadcast receivers through downstream channels of a hierarchical network of data distributors starting from one central distributor through at least one layer of intermediate distributors to a plurality of broadcast receivers. The invention also relates to a method of broadcasting data streams. The invention further relates to a broadcast receiver, distributor and controller for use in such a system.

BACKGROUND OF THE INVENTION

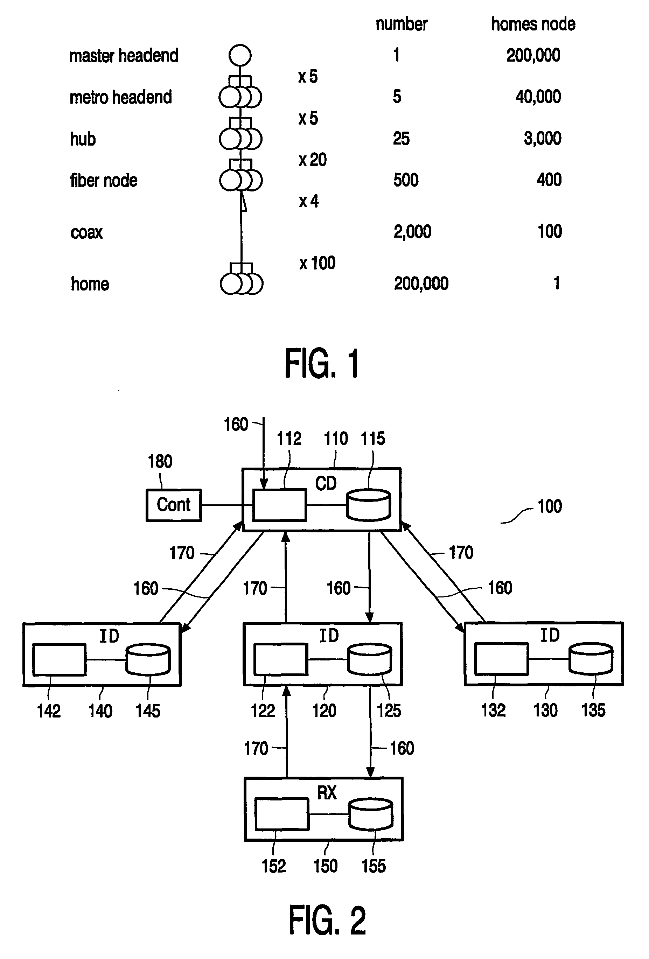

Conventional broadcasting systems, such as cable networks, for broadcasting data streams to a plurality of broadcast receivers use a hierarchical network of data distributors. The top of the network is formed by one central headend, the bottom layer of devices is formed by the residential broadcast receivers. Fig. 1 shows an example of a system aimed at broadcasting audio/video to a total of 200,000 homes using a hierarchy of seven layers of devices. At the top, the master headend may supply data to five metropolitan headends, each covering a disjoint metropolitan area. Each of these areas may be divided further over five hubs with direct links between the metropolitan headend and the hubs. Each of the hubs may be directly connected to twenty fiber nodes that in turn are each connected to four coaxial headends. Each coax cable connects up to one hundred homes.

Typically the coaxial cable has a capacity in the order of one gigabit per second downstream (i.e. in the direction towards the broadcast receiver). Some of this capacity is reserved for conventional broadcast channels, like the most popular television stations. Such channels can in principle be received by all broadcast receivers (i.e. it is transmitted via all coax cables), although actual receipt may be conditional upon payment. A small part of the bandwidth tends to be reserved for upstream communication from the broadcast receiver up through the network to an interested party. Usually, this upstream communication is to the Internet, using broadband cable modems. It may also be to a service provider for interactive applications. With the remaining bandwidth, it is difficult if not infeasible to provide an effective video-on-demand service where a significant portion of the receivers can simultaneously receive a title (e.g. movie) whose supply is started substantially immediately after the user having indicated that it wishes to receive the title. To overcome this, so-called near-video-on demand broadcast distribution protocols have been developed wherein a title is repeatedly broadcast using a group of a plurality of broadcast channels. A highly effective protocol is the Pagoda broadcasting protocol described in "A fixed-delay broadcasting protocol for video-on-demand", of J.-F. Pâris, Proceedings of the 10th International Conference on Computer Communications and Networks, pages 418-423. In this protocol, after an initial delay of, for example, one minute the broadcast receiver can render the title in real-time by retrieving the blocks from a plurality of channels where the protocol prescribes in which channel a block is transmitted and the sequence of transmission of block in a channel. Typically, the receiver needs to tap a few of the group of channels (e.g. two channels) to avoid underflow of data. The repetition rate of the first channel is the highest, resulting in a relatively low initial delay. The repetition rate of the last channel is the lowest (this channel can be used to transmit most different blocks). The initial costs involved in storing a large collecting of titles hampers the introduction of systems described above.

SUMMARY OF THE INVENTION

It is an object of the invention to provide a better scalable broadcast system.

To meet the object of the invention, a broadcast system for broadcasting data includes a hierarchical network of data distributors starting from one central distributor through at least one layer of intermediate distributors to a plurality of broadcast receivers for broadcasting the data streams through downstream channels of the network to the plurality of broadcast receivers; the intermediate distributors being operate to split and/or filter the broadcast data towards the broadcast receivers; at least one distributor hierarchically below the central distributor being operative to insert broadcast data in at least one up-stream channel of the network towards the central distributor; the central distributor is arranged to re-distribute broadcast data received via at least one up-stream channel through at least one downstream channel of the network. Traditionally all data is inserted at the central distributor (master headend) of the network. For a system that is intended to support distribution of a large number of titles, the central distributor needs to be provided with an infrastructure capable of supporting this or capable of being expanded. This comes at a high price, even if not all storage and bandwidth is immediately used. In the system according to the invention, data can be inserted in the upstream channels. Typically, as the system expands, more and more distributors are added. In the architecture according to the invention this can automatically create more distribution bandwidth at limited cost, as a distributor may come with a (possibly relatively small) storage for storing (parts of) titles. These titles are then available for broadcasting through the system.

It should be noted that WO 97/48049 describes a video-on-demand system with a file server that is effectively decentralized over the nodes of the respective users of the system. Data transfer links exist between the nodes. If a node receives a file, it keeps it in its storage for retrieval by other nodes. A central management system registers in which node a copy of a file is stored. When a user requests a file, his node contacts the central management system that checks which one(s) of the nodes have the requested file. Next, a route is established from the closest routable node to the user's node and the data transfer is initiated. Files requested simultaneously by a plurality of users will be simultaneously available from a plurality of the nodes to the new nodes requesting the file in question. The system is designed for high-speed data links or routes between the individual nodes enabling real-time supply of audio/video from one node to another. This approach can not be used for broadcast systems since such systems do not have the capability to send files to all (or even a high portion) of the individual end receivers. In particular end receivers typically only have a very limited bandwidth for sending data. Usually, such bandwidth is not enough for a real-time A/V transmission.

As described by the measure of the dependent claim 2, data blocks of a title are striped over storage of a plurality of distributors. This reduces the upstream bandwidth requirements at the distributor and limits the storage requirements at an individual distributor and.

As described by the measure of the dependent claim 3, a plurality of distributors over whose storage the title is striped are operative to insert stored blocks in at least one data channel of the network under control of one common distribution protocol enabling substantially uninterrupted receipt of a stream of blocks from the plurality of distributors by broadcast receivers. By using the same protocol that prescribes the sequence in which block are transmitted through a group of channels, distributors can easily insert a block at the right time (i.e. in the right time slot) and in the right channel.

As described by the measure of the dependent claim 4, at least two of the plurality of the distributors are operative to insert stored blocks in a respective sub-channel of one data channel. The sub-channel can be seen as a regularly recurring time-slot within a channel. Using the same protocol makes it easy to use the right time-slot, so that distributors can be assigned to sub-channels.

Similarly, as described by the measure of the dependent claim 5, at least two of the plurality of the distributors are operative to insert stored blocks in different data channels of the network.

As described by the measure of the dependent claim 6, the common distribution protocol is a near-video-on-demand protocol for distribution of a title through at least two network channels of different repetition rates of blocks assigned to the channel; blocks assigned to a highest repetition rate channel being inserted by a first group of distributors; and blocks assigned to a lowest repetition rate channel being inserted by a second group of distributors; distributors of the first group being hierarchically higher than distributors of the second group. In this way, advantageously the cheaper and less capable distributors lower down the hierarchy are assigned to low frequency channels. As such, they need less upstream bandwidth and storage requirements may be lower.

As described by the measure of the dependent claim 7, the system includes a distribution controller for controlling insertion of broadcast data in the upstream channels and/or sub-channels of the network. The distribution controller may, for example, trigger insertion by the distributors and inform each of the distributors which blocks it needs to insert, the groups of channels to be used, and the start of the insertion. The controller may determine that a title needs to be inserted in response to demand(s) from broadcast receivers.

As described by the measure of the dependent claim 8, the distribution controller is operative to provide data blocks to a plurality of distributors for subsequent insertion in at least one upstream channel and/or sub-channel. In this way, the controller can allocate the titles to the distributors, preferably in dependence on the hierarchical position of a distributor in the network and/or the load on the distributor (in terms of bandwidth and/or storage).

As described by the measure of the dependent claim 9, at least one residential broadcast receiver is operative to insert broadcast data in at least one upstream data channel and/or sub-channel of the network. Preferably the upstream capabilities of a broadcast receiver are used for broadcasting data to other broadcast receivers. Since increasingly broadcast receivers are equipped with permanent storage (e.g. in the form of a hard disk recorder), the combined storage in the receivers creates a massive storage for titles at no additional cost for the remainder of the system.

As described by the measure of the dependent claim 10, a plurality of residential broadcast receivers are operative to insert broadcast data in at least one upstream data channel and/or sub-channel of the network; each of the plurality of residential broadcast receivers including a respective storage; and a title being striped over the storage of the plurality of receivers. By striping a title over several receivers, the upstream bandwidth requirements for the receiver remain low; also the storage used for broadcasting data is limited.

As described by the measure of the dependent claim 11, the storage includes a solid state memory. By striping a title over a sufficient number of receivers, the storage requirements for each receiver become very low, enabling use of reliable solid state memory at very limited cost.

These and other aspects of the invention are apparent from and will be elucidated with reference to the embodiments described hereinafter.

BRIEF DESCRIPTION OF THE DRAWINGS

In the drawings:

Fig. 1 shows an exemplary hierarchical broadcast network in which the invention can be employed;
Fig. 2 shows block diagram of the broadcast system according to the invention;
Figs.3A and 3B illustrate the Pagoda NVoD protocol;
Fig. 4 illustrates adding a channel in the Pagoda protocol;
Fig. 5 shows multi-point injection and striping according to the invention; and
Figs.6, 7 and 8 illustrate preferred embodiments;

DETAILED DESCRIPTION OF THE PREFERRED EMBODIMENT

Fig.2 shows a block diagram of the broadcast system according to the invention. The broadcast system 100 includes a hierarchical network of data distributors. The top of the network is formed by a central distributor 110. The system includes at least one layer of intermediate distributors. To simplify the figure, only one intermediate layer for downstream broadcasting is shown with three intermediate distributors 120, 130 and 140, each covering a disjoint geographical area. Fig.1 shows a typical hierarchical network for a town of 200,000 connected homes, with three intermediate downstream layers (metro headend, hub, fiber node). In the example, four coax segments are connected to each fiber node. Fig.2 also indicates the downstream path 160 that starts at the central distributor 110, runs through the intermediate distributors 120, 130 and 140 and ends at the plurality of broadcast receivers of the system. Conventionally the distributors split the broadcast signal towards the receivers/distributors that are hierarchically one layer lower. For simplicity only one broadcast receiver 150 is shown. Typically, the path is divided into a plurality of channels, that each may be sub-divided into sub-channels. At the lowest level, usually coaxial segments are used that form a shared medium to the broadcast receivers. On coax, channels are usually frequency multiplexed. Sub-channels within such a channel may be time-multiplexed. At the higher levels, typically fiber optics is used. On such media, channels may also be time-multiplexed. Any suitable transmission technology, such as various types of media and multiplexing techniques, may be used. The broadcast system is described for broadcasting digital data streams through the network to the plurality of broadcast receivers. The data streams may have been encoded using any suitable technology, such as MPEG2 video encoding. Broadcast data is not addressed to a specific receiver and can in principle be received by all receivers in all segments of the hierarchical network. Access to the data may be subject to payment. In the broadcast system according to the invention access may also be controlled using suitable conditional access mechanisms. For each device of the system, Fig. 2 schematically shows the respective hardware/software functionality 112, 122, 132, 142 and 152 necessary for sending/receiving broadcast data and performing all necessary processing. In itself such HW/SW is known and can be used for the system according to the invention. The HW/SW may be formed by suitable transceivers (such as fiber optics transceiver and/or cable modems) controlled by using suitable processors, such as signal processors. Also dedicated hardware, like MPEG encoders/decoders, buffers, etc. may be used.

Traditionally, all data streams were inserted by the central distributor 110 and unmodified copied by each intermediate layer to the lowest part of the network. To this end, the central distributor may have a storage 115 for storing a plurality of titles, such as movies. It may also have a connection 160 for receiving live broadcasts, e.g. through satellite connections. The storage may be implemented on suitable server platforms, for example based on RAID systems. According to the invention, at least one distributor hierarchically below the central distributor is operative to insert broadcast data in at least one up-stream channel of the network towards the central distributor. Fig. 2 shows the upstream channels using number 170. In principle, the upstream channel may start at an intermediate level going upwards. Preferably, the upstream channel is already present at the lowest level, also allowing communication to outside the broadcast system (e.g. towards the Internet via the central distributor or an intermediate distributor outwards). An intermediate/central distributor may receive data streams via the upstream channel(s) from more than one device below it. It is the task of the distributor to combine those streams. It may do this, for example, by compensating for time-differences between the various streams (de-jittering), e.g. by temporarily storing part of the streams and sending it upwards using one common time base. Such a time base may be provided by the central distributor via the downstream channel. De-jittering is well-known and will not be described further. In particular, the central distributor is arranged to re-distribute broadcast data received via at least one up-stream channel through at least one downstream channel of the network. To be able to supply a title via an upstream channel the injecting device needs to have access to a source of the title. Fig.2 shows that the intermediate distributors 120, 130 and 140 each have a respective storage 125, 135 and 145 for storing at least part of a title. Such storage may be formed by a hard disk, for example implemented using a RAID system, or other suitable storage, like solid state memory. As will be described in more detail below, also the broadcast receivers 150 may inject a title upwards. If so, the receiver also needs access to stored title. Shown is a storage 155. This storage may also be formed by a hard disk or other suitable storage, like solid state memory. Such a hard disk may any how already be present for (temporarily or permanently) storing titles received via the downstream channels.

Preferably, data blocks of a title are striped over storage of a plurality of distributors. This reduces the demand on upstream capacity and storage in the distributors. Typically, distributors at one level will have similar upstream capabilities, where the capacity decreases lower in the hierarchy. To simplify the striping it is preferred to stripe a title using only distributors at one level. Preferably the title is striped over more distributors if the distributors are lower in the hierarchy. Striping itself is known for hard disks in one local storage system. In the system according to the invention, striping takes place over storage connected via a broadcasting system. Once the right selection of blocks of a title has been stored in the respective storage of the involved distributors, playback of the striped title can start. Playback may take place under control of a central device (distribution controller), such as device 180 in Fig.2. Preferably, the central device 180 is connected to or forms part of the central distributor 110. If so desired, there can also be more distribution controllers, e.g. one per layer or one per intermediate distributor, where each distributor is responsible for part of the network. The central device 180 may have knowledge of which blocks of the title are stored in which storage. The central device may then issue explicit 'read' instructions at the right time to the right distributor, to ensure that the blocks are broadcast in the right sequence. As such the distribution controller controls insertion of broadcast data in the upstream channels and/or sub-channels of the network.

In a preferred embodiment, the plurality of distributors over whose storage the title is striped are operative to insert stored blocks in at least one data channel of the network under control of one common distribution protocol. In this embodiment, control of playback is decentralized. Using the same protocol enables substantially uninterrupted receipt of a stream of blocks from the plurality of distributors by broadcast receivers. A channel may be divided into a plurality of sub-channels. Using a common protocol that prescribes which sub-channel within the channel needs to be used, the distributors are operative to insert striped blocks in a respective sub-channel of one data channel. The protocol may also be based on using multiple channels for broadcasting a title. By prescribing for each data block of the title in which channel it needs to be inserted, the distributors are operative to insert stored blocks in different data channels of the network while the receiver can still receive the title as if it had been broadcast by the central distributor.

Blocks of a title may be inserted by distributors at more than one hierarchical layer. Preferably, the common distribution protocol for controlling the insertion is a near-video-on-demand (NVoD) protocol for distribution of a title through at least two network channels of different repetition rates of blocks assigned to the channel. Using such a protocol, advantageously blocks assigned to a highest repetition rate channel are inserted by a group of distributors that are hierarchically above a second group of distributors. The second group of distributors inserts blocks assigned to a lowest repetition rate channel. In this way, the load caused by the insertion (particularly in terms of upstream capacity and storage requirements) corresponds to the capacity of the involved distributors.

**Fixed-delay pagoda broadcasting**

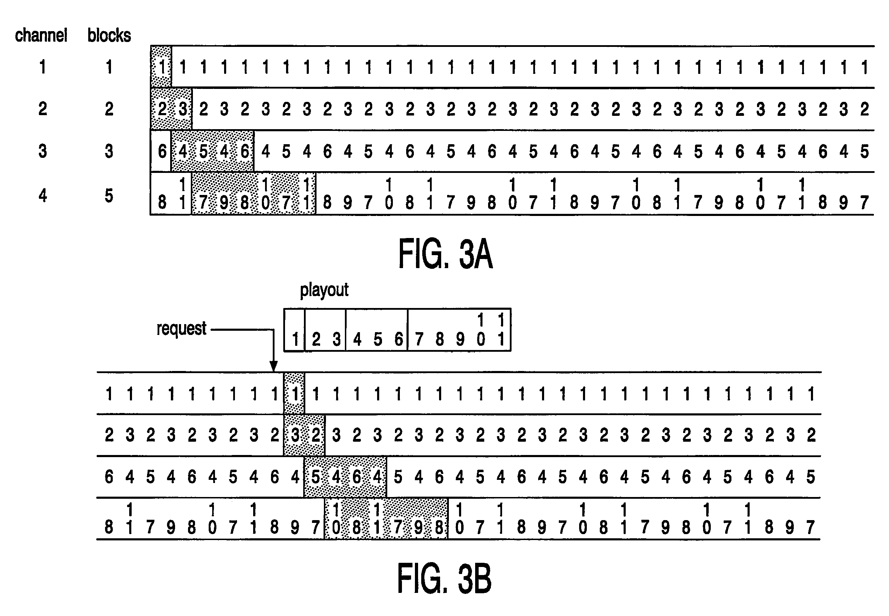

Preferably, the fixed-delay pagoda broadcasting protocol is used as the near-video-on-demand protocol for broadcasting data blocks of the titles. This protocol is asymptotically optimal, and it can easily be adapted to limited client I/O bandwidth. A small example of this is given in Fig.3A. Fig.3B shows how the retrieval takes place for a request at an arbitrary moment. In the example of Fig. 3, at most two channels are tapped at the same time, and all blocks arrive in time. Key in this NVoD scheme is that channel $i$ starts being tapped after the tapping of channel $i-2$ has finished, thereby limiting the number of channels to be tapped to two. This means e.g. that for channel 4 a receiver has to wait two time units before it can start tapping the channel. As block 7 has to be received within 7 time units after the request, this means that only 5 time units are left to receive it, and hence it has to be transmitted with a period of at most 5, rather than 7. It is actually transmitted with a period of 4. The general structure of the above broadcast scheme will be described for a given number $c$ of server channels and a given number $r$ of client channels that can be received. Furthermore, an offset $o$ is considered as described meaning that a user will always wait an additional $o$ time units before playing out. The start of the (tapping) segment in channel $i$ is denoted by $s_i$, and the end by $e_i$. Then, in order not to exceed the maximum number $r$ of channels that a user can receive, tapping in channel $i=r+1, ...,c$ is started after the tapping in channel $i-r$ has ended. Hence

$$s_i = \begin{cases} 1 & \text{for } i = 1,...r \\ e_{i-r} + 1 & \text{for } i = r+1,...,c \end{cases}$$

Next, in channel $i$ blocks $l_i,...,h_i$ are transmitted. The number of different blocks transmitted in channel i is hence given by $n_i = h_i - l_i + 1,$ and

$$l_i = \begin{cases} 1 & \text{for } i = 1 \\ h_i + 1 & \text{for } i > 1 \end{cases}$$

In order to receive each block in time, block $k$ is to be transmitted in or before time unit $o+k$. If block $k$ is transmitted in channel $i$, which starts being received in time unit $s_i$, this means that block $k$ should be broadcast with a period of at most $o+k-(s_i-1)$. Ideally, this period is exactly met for each block $k$, but it is sufficient to get close enough.

The structure of channel $i$ in the pagoda scheme is as follows. First, channel $i$ is divided into a number $d_i$ of sub-channels, which is given by

$$d_i = \left[ \sqrt{o + l_i - (s_i - 1)} \right] \qquad (1)$$

i.e., the square root of the optimal period of block $l_i$, rounded to the nearest integer. Each of these sub-channels gets a fraction $1/d_i$ of the time units to transmit blocks, in a round-robin fashion. In other words, in time unit $t$ sub-channel $t \bmod d_i$ can transmit a block, where we number the sub-channels $0,1,...,d_i-1$.

Now, if a block $k$ is given a period $p_k$ within a sub-channel of channel $i$, it is broadcasted in channel $i$ with a period of $p_k d_i$. Hence, to obtain that $p_k d_i \le o+k-(s_i-1)$, this means that

$$p_k \le \left[ \frac{o + k - (s_i - 1)}{d_i} \right]$$

By taking equal periods for all blocks within each sub-channel, collisions can be trivially avoided. So, if $l_{ij}$ is the lowest block number in sub-channel $j$ of channel $i$, this means that the following period is chosen

$$p_{ij} = \left\lfloor \frac{o + l_{ij} - (s_i - 1)}{d_i} \right\rfloor$$

for all blocks within sub-channel $j$ of channel $i$, and hence we can transmit $n_{ij}=p_{ij}$ blocks (blocks $l_{ij},...,l_{ij}+n_{ij}-1$) in this sub-channel. The block number $l_{ij}$ is given by

$$l_{ij} = \begin{cases} l_i & \text{for } j = 0 \\ l_{i,j-1} + n_{i,j-1} & \text{for } j > 1 \end{cases}$$

The total number $n_i$ of blocks transmitted in channel $i$ is then given by

$$n_i = \sum_{j=0}^{d_i-1} n_{ij}$$

with which we can compute $h_i = l_i + n_i - 1$.

Finally, the moment of start and end of the segments within a channel is reviewed. All sub-channels of channel $i$ start transmitting at time $s_i$. Sub-channel $j$ of channel $i$ is ready after $n_{ij}$ blocks, which takes $d_i n_{ij}$ time units within channel $i$. Hence, the end of the segment in sub-channel $j$ is given by $e_{ij} = s_i - 1 + d_i n_{ij}$, and channel $i$ ends when its last sub-channel ends, at

$$e_i = e_{i,d_i-1} = s_i - 1 + d_i n_{i,d_i-1}$$

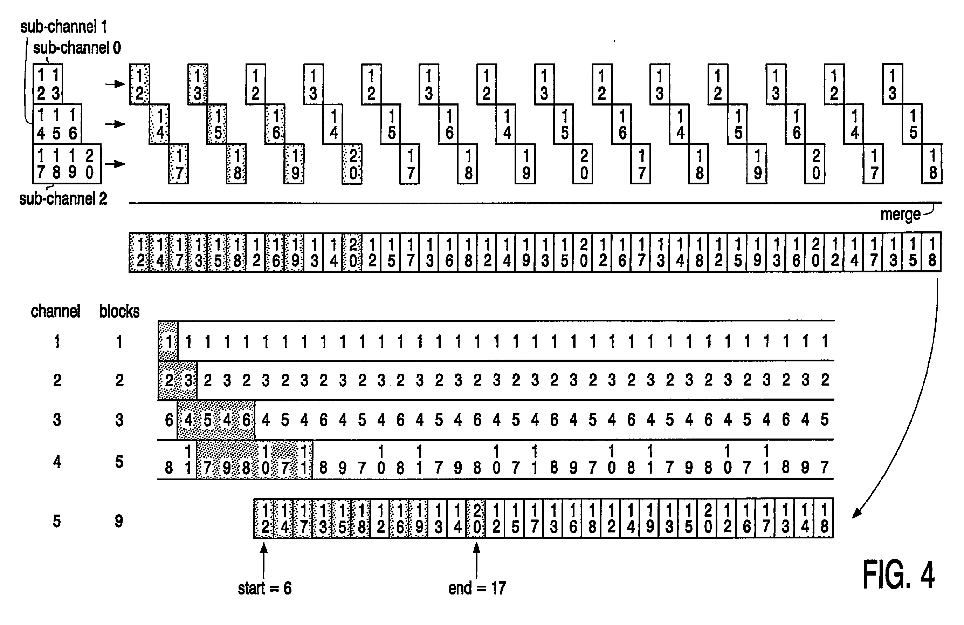

To exemplify the above, Fig.4 illustrates adding a fifth channel to the example of Fig.3 . For the fifth channel, the following holds: $l_5$ = 12, $s_5=e_3+1$ =6, and an offset $o$=0. The number of sub-channels is d$_5$ = [$\sqrt{}$(0+12-5)] = 3. For sub-channel $j$=0 this gives $l_{5,0}$ = 12, hence we can transmit $n_{5,0}$ = $\llcorner$(0 + 12 - 5)/3$\lrcorner$=2 blocks in this sub-channel, being blocks 12 and 13. For sub-channel $j$=1 this gives $l_{5,1}$ = 14, hence we can transmit $n_{5,1}$ = $\llcorner$(0+14-5)/3$\lrcorner$= 3 blocks in this sub-channel, being blocks 14, 15, and 16. For sub-channel $j$=2 this gives $l_{5,2}$ = 17, hence we can transmit $n_{5,2}$ = $\llcorner$(0 + 17 - 5) / 3$\lrcorner$ = 4 blocks in this sub-channel, being blocks 17, 18, 19, and 20. The end of the segments in the sub-channels are given by $e_{5,0}$ = 5 + 3 * 2 = 11, $e_{5,1}$ = 5 + 3 * 3 =14, and $e_{5,2}$ = 5 + 3 * 4 = 17, hence $e_5$ = 17.

The values of $h_i$, i.e., the number of blocks in which a movie can be split, are given in table 1 for an offset zero and for different values of $r$. The series converge to power series, with bases of about 1.75, 2.42, 2.62, and $e \approx$ 2.72, for $r$=2, 3, 4, and ∞, respectively.

Table 1.

|  | $r$=2 | $r$=3 | $r$=4 | $r$=∞ |
|---|---|---|---|---|
| $i$=1 | 1 | 1 | 1 | 1 |
| $i$=2 | 3 | 3 | 3 | 3 |
| $i$=3 | 6 | 8 | 8 | 8 |
| $i$ = 4 | 11 | 17 | 20 | 20 |
| $i$ = 5 | 20 | 39 | 47 | 50 |
| $i$ = 6 | 38 | 86 | 113 | 124 |
| $i$ = 7 | 68 | 198 | 276 | 316 |
| $i$ = 8 | 122 | 467 | 692 | 822 |
| $i$ = 9 | 221 | 1102 | 1770 | 2176 |
| $i$ =10 | 397 | 2632 | 4547 | 5818 |
| $i$ =11 | 708 | 6308 | 11800 | 15646 |
| $i$ =12 | 1244 | 15192 | 30748 | 42259 |
| $i$ =13 | 2195 | 36672 | 80273 | 114420 |
| $i$=14 | 3862 | 88710 | 210027 | 310284 |
| $i$ =15 | 6757 | 214792 | 549998 | 842209 |

The last column corresponds to having no limit on the number of client channels. Using the above values of $h_c$, the maximum waiting time is given by a fraction $1/h_c$ of the movie length when using $c$ channels. If a positive offset $o$ is used, the general formula for the maximum waiting time is a fraction $(o+1)/h_c$ of the movie length.

In the previous sections, the number $d_i$ of sub-channels of channel $i$ is fixed, given by equation (1). It should be noted that also different values may be used to get a better solution in terms of the number of blocks into which a movie can be split. To this end, a first-order optimization can be applied by exploring per channel $i$ a number of different values around the target value given in (1), calculating the resulting number of blocks that can be fit into channel $i$, and taking the number of sub-channels for which channel $i$ can contain the highest number of blocks. Note that this is done per individual channel, i.e., no back-tracking to previous channels occurs, to avoid an exponential run time for a straightforward implementation. This may lead to sub-optimal solutions, as choosing a different number of sub-channels in channel $i$ to get a higher number of blocks in it may cause the end time $e_i$ to increase, thereby increasing the start time $s_{i+r}$ of channel $i+r$, which may in turn decrease the number of blocks that can be fit into this channel. Nevertheless, this first-order optimization gives good results as is shown in table 2. The new values of $h_i$ are given for an offset zero and for different values of $r$. Although the numbers are higher than the ones in the previous table, the bases of the power series are the same as those of table 1.

Table 2.

| | r=2 | | r=3 | | r=4 | | r= ∞ | |
|---|---|---|---|---|---|---|---|---|
| i = 1 | 1 | | 1 | | 1 | | 1 | |
| i = 2 | 3 | | 3 | | 3 | | 3 | |
| i = 3 | 6 | | 8 | | 8 | | 8 | |
| i = 4 | 11 | | 18 | (+1) | 20 | | 20 | |
| i = 5 | 21 | (+1) | 41 | (+2) | 47 | | 50 | |
| i = 6 | 42 | (+4) | 94 | (+8) | 115 | (+2) | 127 | (+3) |
| i = 7 | 81 | (+13) | 218 | (+20) | 287 | (+11) | 328 | (+12) |
| i = 8 | 148 | (+26) | 510 | (+43) | 728 | (+36) | 859 | (+37) |
| i = 9 | 269 | (+48) | 1213 | (+111) | 1868 | (+98) | 2283 | (+107) |
| i = 10 | 478 | (+81) | 2908 | (+276) | 4831 | (+284) | 6112 | (+294) |
| i =11 | 841 | (+133) | 6993 | (+685) | 12543 | (+743) | 16459 | (+813) |
| i =12 | 1487 | (+243) | 16869 | (+1677) | 32685 | (+1937) | 44484 | (+2225) |
| i =13 | 2627 | (+432) | 40749 | (+4077) | 85391 | (+5118) | 120485 | (+6065) |
| i =14 | 4617 | (+755) | 98625 | (+9915) | 223390 | +13363 | 326795 | +16511) |
| i =15 | 8058 | (+1301) | 238841 | (+24049) | 584993 | (+34995) | 887124 | (+44915) |

In the remainder, the values of table 1 for the conventional Pagoda protocol will be used.

In the description so far, it has been assumed that titles have a constant bit rate (CBR). The transmission schemes, however, can easily be adapted to cope with variable bit rate (VBR) streams. The time at which block *k* must have arrived, which is given by $o+k$ for CBR streams, is then given by a function $o+t(k)$. Here, $t(k)$ is an increasing function, that describes the way the stream is to be played out in time. The effect on the transmission scheme is as follows. If block *k* is transmitted in channel *i*, which starts at time $s_i$, then it must be broadcasted with a period of at most $o+t(k)-(s_i-1)$. Hence, the target value for the number of sub-channels, as given in equation (1), now becomes

$$d_i = \left\lfloor \sqrt{o+t(l_i)-(s_i-1)} \right\rfloor$$

The number of blocks in sub-channel *j* of channel *i,* i.e., the period used within this sub-channel, is then given by $n_{ij} = p_{ij} = \left\lfloor \dfrac{o+t(l_{ij})-(s_i-1)}{d_i} \right\rfloor$.

The rest of the computations remain the same.

## Network assumptions

In the remainder, three examples will be given of multi-point injection according to the invention. Calculations that support the examples are given for a hierarchical network as shown in Fig. 1. It is assumed that the main bottleneck is given by the capacities of the upstream and downstream links from the homes to the fiber nodes. In the example these are taken to be 400 kb/s and 20 Mb/s, respectively. Assuming a video transmission rate of 5 Mb/s, this implies that 0.08 video channels can be upstreamed and 4 video channels can be downstreamed per home. Having 200,000 homes, this gives a total upstream capacity of 16,000 video channels. Using a near-video-on-demand scheme, also the limited downstream capacity should be taken into account. In the examples, it is assumed that there are no practical limitations on bandwidth above the fiber nodes. Persons skilled in the art will be able to design different systems based on the described principles. Further, it is assumed that all homes are permanently connected, and that no failure at the nodes or data loss during transmission occurs. Finally, it is assumed that it is desired to have a collection of 1000 movies, which each last 6000 seconds (100 minutes). The size of a movie is hence 30 Gb, or 3.75 GB.

**A preferred NVoD solution**

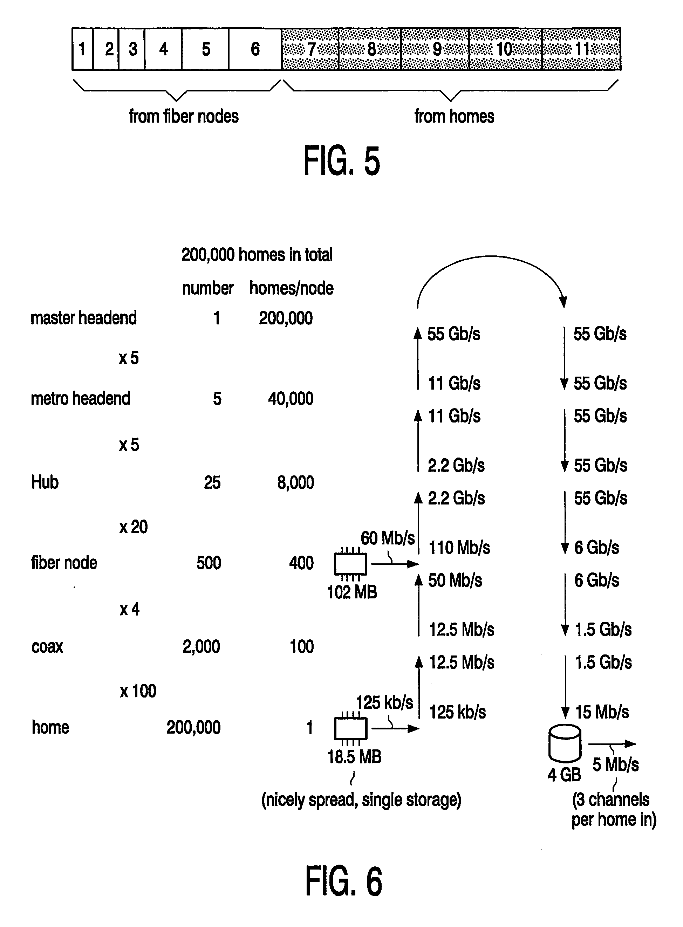

Aiming at a maximum response time of about one second, and a limit of $r=3$ channels to be tapped, table 1 indicates that 11 transmission channels should be used, where a movie can be split into 6308 blocks, and the actual maximum response time is $6000/6308 \approx 0.95$ s. Generating the 11 transmission channels of all 1000 movies at the homes would use 11,000 out of the available 16,000 channels. In the first example as shown in Fig. 6, a number of channels are transmitted from the fiber nodes. The remaining channels may be transmitted from another distributor, such as the central distributor. In the first example, the remaining channels are transmitted by the broadcast receivers acting as upstream distributors. By injecting some channels at the higher levels the bandwidth requirement on the upstream channels from the homes are reduced. Preferably, the first transmission channels per movie are stored at the fiber nodes, limiting the storage requirements for the fiber nodes, as the first transmission channels per movie concern a relatively low number of blocks. For example, by transmitting the first six NVoD channels from the fiber nodes, a fraction $86/6308 \approx 0.014$ of each movie has to be stored at the level of the fiber nodes, which corresponds to $3750 * 86 / 6308 \approx 51$ MB per movie. As we have 1000 movies and 500 fiber nodes, this can be stored in a solid state memory, such as a RAM module or Flash memory module, of 102 MB per fiber node. In this way, each fiber node stores the blocks for 6 channels of two movies. The remaining storage, being a fraction $(6308-86)/6308 \approx 0.986$ of each movie, meaning about 3.7 GB, has to be distributed over the homes. Of course this may be stored in one or a few broadcast receivers. However, it is preferred to use a more even distribution. Distributing this over all receivers, this requires a storage capacity of $3700 * 1000 / 200,000 \approx 18.5$ MB per home, which can also be done in solid state modules. This even distribution can be realized by striping each movie into 200 stripes, and letting each home transmit a stripe of each of the NVoD channels 7-11. Of course also fewer distributors may be involved and redundancy may be introduced via the other distributors. Fig.5 gives a graphical representation of how a movie is split into blocks and stripes. In this example, the blocks for the first 6 channels of a movie are stored in one fiber node; the remaining blocks are striped over the residential broadcast receivers (the striping is indicated using the horizontal grey stripes). The figure is not to scale. The boundaries of the segments for the 11 NVoD channels are given by the values of $h_i$ in table 1. A fiber node can then generate the complete NVoD scheme by merging 200 'stripe channels' per NVoD channel. Each fiber node has 400 homes connected to it, so it can generate the entire NVoD scheme of two movies. Note that each 'stripe channel' has a bit rate of $5000 / 200 = 25$ kb/s, which gives a total upstream bit rate of 125 kb/s per home.

The required storage at the fiber nodes and at the homes is relatively independent of the number of channels that is used, i.e., of the response time that is required. For instance, if one increases the number of channels to 12, then the response time is reduced to $6000/15192 \approx 0.39$ s. As a result, a movie is split into about 2.4 times as many blocks, and hence the blocks are about 2.4 times smaller. Therefore, in an alternative example it is possible to let the fiber nodes generate one channel more, i.e., channels 1-7, and to let the homes generate channels 8-12. The storage at a fiber node then equals $3750 * 198/15192 \approx 49$ MB per movie, which is roughly the same as the 51 MB required for 11 channels. The storage requirement at a home remains slightly less than a fraction 1/200 of a movie. Table 3 shows what the values in Fig. 5 are if a different number of channels are assigned to the fiber nodes and homes.

Table 3.

| fiber node channels | home channels | fiber node storage [MB] | fiber node bandwidth [Mb/s] | home bandwidth [kb/s] |
|---|---|---|---|---|
| -- | 1--11 | 0 | 0 | 275 |
| 1 | 2--11 | 1.2 | 10 | 250 |
| 1--2 | 3--11 | 3.6 | 20 | 225 |
| 1--3 | 4--11 | 9.5 | 30 | 200 |
| 1--4 | 5--11 | 20.2 | 40 | 175 |
| 1--5 | 6--11 | 46.4 | 50 | 150 |
| 1--6 | 7--11 | 102.3 | 60 | 125 |
| 1--7 | 8--11 | 235.4 | 70 | 100 |
| 1--8 | 9--11 | 555.3 | 80 | 75 |
| 1--9 | 10--11 | 1310.3 | 90 | 50 |
| 1--10 | 11 | 3129.4 | 100 | 25 |
| 1--11 | -- | 7500.0 | 110 | 0 |

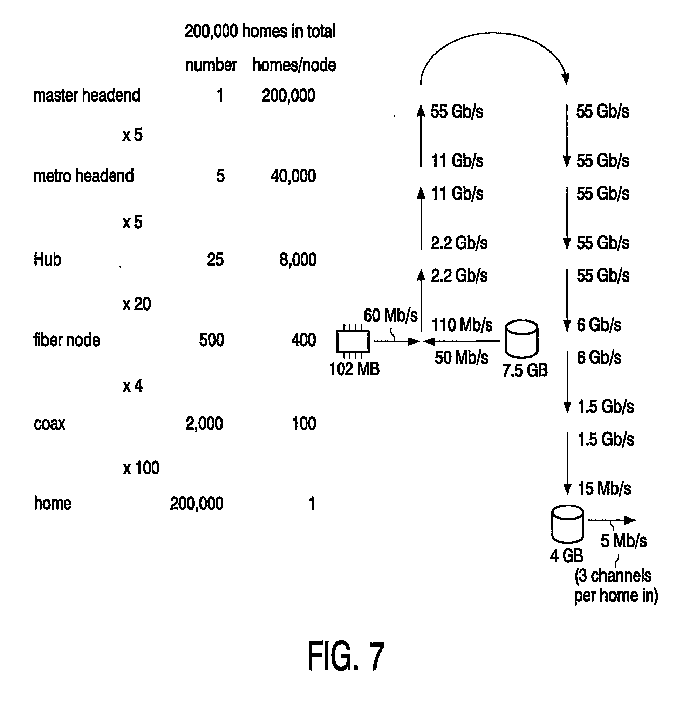

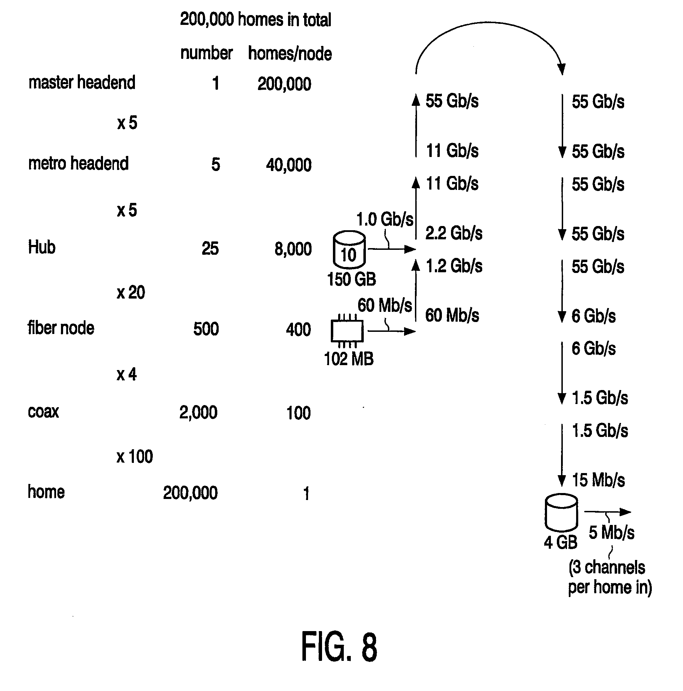

Alternatively, NVoD channels 7-11 of each movie can also be inserted higher into the network. Fig.7 shows a solution where they are inserted at the fiber nodes. To this end the fiber nodes need to be equipped with more storage, such as a hard disk for storing the titles. Fig.8 shows a further alternative where the channels are inserted at the hubs. This may involve having a storage of 150 GB per hub.

The distribution controller 180 of Fig. 2 may have the task to provide data blocks of title to the appropriate distributors for subsequent insertion in at least one upstream channel and/or sub-channel. It may do this by directly addressing the blocks to the respective intended distributor. An alternative is to instruct each of the distributors which blocks to extract and then broadcast the title, so that each distributor can extract and store the blocks that are assigned to it.

**Filtering**

To support simultaneous transmission of a large collection of near-video-on demand movies (e.g. 1000 movies) the broadcast system needs a high bandwidth. For the levels between the master headend and the fiber nodes this can easily be achieved using suitable dedicated links, such as using fiber optic based distribution. Particularly at the lowest level, use of a shared medium, such as coax, is most economical. By selectively filtering data, for example in the fiber optic node, and only passing on data for which there is at least one interested receiver the bandwidth can be sufficient for simultaneous distribution of a relatively large number of movies. Using the filtering, it is not guaranteed that data transmitted by the master headend is actually receivable by all broadcast receivers: it may not be present on the local network segment. Note that also at higher levels in the network already a selection can be made, e.g., a hub only has to forward the blocks of the movies that will be consumed by any user in its sub-tree; the others do not have to be forwarded.

**Redundancy**

The described broadcast schedules may fail if one of the distributors (including the broadcast receiver) is not capable of delivering the blocks. For example, if the set-top box (broadcast receiver) in any of the 200 homes that participate in broadcasting a movie does not deliver its share of stripe channels in time the title can not be fully received or rendered in real-time. In the example given above of striping blocks over receivers, a share consists of five stripe channels. There can be many reasons a set-top box fails to deliver its share, the most likely one being that the set-top box is switched off, because its owner is away on holidays or because of a power outage. Another reason can be that the user temporarily needs its full upstream bandwidth for something more urgent. In the former case, the set-top box will not be available for a long time, in the order of days or weeks, so its upstream bandwidth can be used by other set-top boxes on the same coax. This means that also its broadcasting tasks can be taken over by another set-top box that is on the same coax. The redistribution of broadcasting tasks should not take much longer than a few minutes. In the latter case, the interruption is likely to be quite short, in the order of seconds or minutes. This can even be enforced by a bandwidth scheduler in the set-top box or controller 180.

Many measures may be taken to reduce the likelihood of a receiver not being able to supply the assigned blocks. For example, the receivers may be designed such that a user is discouraged to switch the receiver off. The receiver may be implemented in a reasonably fault-tolerant manner, e.g. using flash memory for storing its shares, using a battery to overcome short power failures, etc.

In a preferred embodiment, redundancy is introduced by striping a block over at least one more device and encoding the stored blocks in such a way that failure of one (or more) devices can be overcome by regenerating the blocks from the still accessible encoded blocks. A preferred encoding scheme for the stripe channels is an ($N, k$) Reed-Solomon encoding. Reed-Solomon encoding in itself is well-known. A description can also be found in S.B.Wicker and V.K. Bhargava, editors. *Reed-Solomon Codes and Their Applications.* IEEE Press, 1994. For the example, the Reed-Solomon encoding is preferably used with the following parameters: $N$=200 and $k$=200-$r$. The movie is divided into 200-$r$ shares of stripe channels and $r$ parity like shares of stripe channels are calculated. The resulting 200 shares are distributed among 200 set-top boxes. These encoded stripe channels are 200/(200-$r$) times as 'fat' as the bare stripe channels described in the previous sections. It can be shown that for $r$=10 this means that the fraction of time the transmission fails is down to less than one in a million and the probability of a half a minute hiccup in a movie is 1 : 20,000 at the expense of an increase of about 5% in required upstream bandwidth and storage at the set-top boxes.

Assuming that the title is striped over devices at a certain level in the network, a hierarchically higher level can easily recover the blocks. As an example, if the title is striped over a group of set top boxes that are all hierarchically below one fiber node this fiber node can easily retrieve the original blocks. To this end, the fiber node needs additional hardware and/or software to perform the decoding (such as a Red Solomon decoding) of the movies that are broadcast from the 400 set-top boxes below it. Such hardware/software is known and will not be described further. Since it is preferred to store a movie entirely below a single fiber node, the fiber node can do the decoding, so the implementation of redundancy does not require any additional hardware/software and bandwidth above the fiber node level.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The words "comprising" and "including" do not exclude the presence of other elements or steps than those listed in a claim. The invention can be implemented by means of hardware comprising several distinct elements, and by means of a suitably programmed computer. In the system claims enumerating several means, several of these means can be embodied by one and the same item of hardware. The computer program product may be stored/distributed on a suitable medium, such as optical storage, but may also be distributed in other forms, such as being distributed via the network of the broadcasting system, Internet or wireless telecommunication systems.

**Claims**

1. A broadcast system for broadcasting data includes a hierarchical network of data distributors starting from one central distributor through at least one layer of intermediate distributors to a plurality of broadcast receivers for broadcasting the data through downstream channels of the network to the plurality of broadcast receivers; at least one distributor hierarchically below the central distributor being operative to insert broadcast data in at least one up-stream channel of the network towards the central distributor; the central distributor being arranged to re-distribute broadcast data received via at least one up-stream channel through at least one downstream channel of the network.

2. A broadcast system as claimed in claim 1, wherein data blocks of a title are striped over storage of a plurality of distributors for subsequent insertion as broadcast data in at least one up-stream channel.

3. A broadcast system as claimed in claim 2, wherein a plurality of distributors over whose storage the title is striped are operative to insert stored blocks in at least one data channel of the network under control of one common distribution protocol enabling substantially uninterrupted receipt of a stream of blocks from the plurality of distributors by broadcast receivers.

4. A broadcast system as claimed in claim 3, wherein at least two of the plurality of the distributors are operative to insert stored blocks in a respective sub-channel of one data channel.

5. A broadcast system as claimed in claim 3, wherein at least two of the plurality of the distributors are operative to insert stored blocks in different data channels of the network.

6. A broadcast system as claimed in claim 3, wherein the common distribution protocol is a near-video-on-demand protocol for distribution of a title through at least two network channels of different repetition rates of blocks assigned to the channel; blocks assigned to a highest repetition rate channel being inserted by a first group of distributors; and blocks assigned to a lowest repetition rate channel being inserted by a second group of distributors; distributors of the first group being hierarchically higher than distributors of the second group.

7. A broadcast system as claimed in claim 1, wherein the broadcast system includes a distribution controller for controlling insertion of broadcast data in the upstream channels and/or sub-channels of the network.

8. A broadcast system as described in claim 7, wherein the distribution controller is operative to provide data blocks to a plurality of distributors for subsequent insertion in at least one upstream channel and/or sub-channel.

9. A broadcast system as claimed in claim 1, wherein at least one broadcast receiver is operative to insert broadcast data in at least one upstream data channel and/or sub-channel of the network.

10. A broadcast system as claimed in claims 2 and 9, wherein a plurality of broadcast receivers are operative to insert broadcast data in at least one upstream data channel and/or sub-channel of the network; each of the plurality of broadcast receivers including a respective storage; and a title being striped over the storage of the plurality of receivers.

11. A broadcast system as claimed in claim 10, wherein the storage includes a solid state memory.

12. A broadcast system as claimed in claim 1, wherein the intermediate distributors are operative to split and/or filter the broadcast data towards the broadcast receivers.

13. A method of broadcasting data streams through a hierarchical network of data distributors starting from one central distributor through at least one layer of intermediate distributors to a plurality of broadcast receivers for broadcasting the data streams through downstream channels of the network to the plurality of broadcast receivers; the method including:

inserting broadcast data at at least one distributor hierarchically below the central distributor in at least one up-stream channel of the network towards the central distributor;
receiving broadcast data via the up-stream channel of the network; and
re-distributing the received broadcast data through at least one downstream channel of the network.

14. A broadcast receiver for use in a broadcast system as claimed in claim 1, wherein the broadcast receiver is operative to receive data blocks broadcast through at least one downstream channel of the network for subsequent rendering; and to insert broadcast data in at least one up-stream channel of the network towards a central distributor for re-distributing by the central distributor through at least one downstream channel of the network.

15. A broadcast distribution controller for use in a broadcast system as claimed in claim 1; the distribution controller being operative to control synchronized insertion of broadcast data in at least one upstream channel and/or sub-channel of the broadcast network.

16. A central broadcast data distributor for use in a broadcast system as claimed in claim 1, the central broadcast data distributor being operative to re-broadcast broadcast data received via at least one up-stream channel through at least one downstream channel of the network towards a plurality of broadcast receivers.

17. An intermediate broadcast data distributor controller for use in the broadcast system as claimed in claim 1 that includes a hierarchical network of data distributors starting from one central distributor through at least one layer of intermediate broadcast data distributors to a plurality of broadcast receivers for broadcasting the data streams through downstream channels of the network to the plurality of broadcast receivers; the intermediate broadcast data distributor being operative to insert broadcast data in at least one up-stream channel of the network towards the central distributor for re-distribution of the broadcast data by the central distributor through at least one downstream channel of the network.

**Patentansprüche**

1. Rundfunksystem zum Aussenden von Daten mit einem hierarchischen Netzwerk von Datenverteilern ausgehend von einem zentralen Verteiler über wenigstens eine Schicht von Zwischenverteilern zu einer Anzahl Rundfunkempfänger zum Aussenden der Daten über Stromabwärtskanäle des Netzwerkes zu der Anzahl Rundfunkempfänger; wobei wenigstens ein Verteiler hierarchisch unter dem zentralen Verteiler wirksam ist zum Einfügen von Rundfunkdaten in wenigstens einen Stromaufwärtskanal des Netzwerkes in Richtung des zentralen Verteilers; wobei der zentrale Verteiler dazu vorgesehen ist, ausgesendete Daten, die über wenigstens einen Stromaufwärtskanal empfangen worden ist, über wenigstens einen Stromabwärtskanal des Netzwerkes neu zu verteilen.

2. Rundfunksystem nach Anspruch 1, wobei Datenblöcke eines Titels über Speicherung einer Anzahl Verteiler zur nachfolgenden Einfügung als ausgesendete Daten in wenigstens einen Stromaufwärtskanal gestreift werden.

3. Rundfunksystem nach Anspruch 2, wobei eine Anzahl Verteiler, über deren Speicherung der Titel gestreift wird, wirksam sind zum Einfügen gespeicherter Blöcke in wenigstens einen Datenkanal des Netzwerkes, und zwar unter Ansteuerung eines einzigen gemeinsamen Verteilungsprotokolls, wodurch ein im Wesentlichen ununterbrochener Empfang eines Stromes von Blöcken aus den vielen Verteilern durch Rundfunkempfänger ermöglicht wird.

4. Rundfunksystem nach Anspruch 3, wobei wenigstens zwei Verteiler der vielen Verteiler wirksam sind zum Einfügen gespeicherter Blöcke in einen betreffenden Subkanal eines einzigen Datenkanals.

5. Rundfunksystem nach Anspruch 3, wobei wenigstens zwei Verteiler der vielen Verteiler wirksam sind zum Einfügen gespeicherter Blöcke in verschiedene Datenkanäle des Netzwerkes.

6. Rundfunksystem nach Anspruch 3, wobei das gemeinsame Verteilungsprotokoll ein Nahezu-Video-auf Abruf-Protokoll zur Verteilung eines Titels über wenigstens zwei Netzwerkkanäle mit verschiedenen Wiederholungsgeschwindigkeiten von Blöcken, die dem Kanal zugeordnet sind; wobei Blöcke, die einem Kanal mit der höchsten Wiederholungsrate zugeordnet sind, durch eine erste Gruppe von Verteilern eingefügt werden; und Blöcke, die einem Kanal mit einer niedrigeren Wiederholungsrate zugeordnet sind, durch eine zweite Gruppe von Verteilern eingefügt werden; wobei Verteiler der ersten Gruppe hierarchisch höher sind als Verteiler der zweiten Gruppe.

7. Rundfunksystem nach Anspruch 1, wobei das Rundfunksystem einen Verteilungscontroller aufweist zur Steuerung der Einfügung von Rundfunkdaten in Stromaufwärtskanäle und/oder Subkanäle des Netzwerkes.

8. Rundfunksystem nach Anspruch 7, wobei der Verteilungscontroller wirksam ist zum Schaffen von Datenblöcken zu einer Anzahl Verteiler zur darauf folgenden Einfügung in wenigstens einen Stromaufwärtskanal und/oder Subkanal.

9. Rundfunksystem nach Anspruch 1, wobei wenigstens ein Rundfunkempfänger wirksam ist zum Einfügen von Rundfunkdaten in wenigstens einen Stromaufwärtsdatenkanal und/oder Subkanal des Netzwerkes.

10. Rundfunksystem nach Anspruch 2 und 9, wobei eine Anzahl Rundfunkempfänger wirksam ist um Rundfunkdaten in wenigstens einen Stromaufwärtsdatenkanal und/oder Subkanal des Netzwerkes einzufügen; wobei jeder Empfänger der vielen Rundfunkempfänger einen betreffenden Speicher aufweist; und wobei ein Titel über den Speicher der vielen Empfänger gestreift wird.

11. Rundfunksystem nach Anspruch 10, wobei der Speicher einen Halbleiterspeicher aufweist.

12. Rundfunksystem nach Anspruch 1, wobei die zwischen liegenden Verteiler wirksam sind um die Rundfunkdaten in Richtung der Rundfunkempfänger zu spalten und/oder zu filtern.

13. Verfahren zum Aussenden von Datenströmen über ein hierarchisches Netzwerk von Datenverteilern, ausgehend von einem zentralen Verteiler über wenigstens eine Schicht von zwischen liegenden Verteilern zu einer Anzahl Rundfunkempfänger zum Aussenden der Datenströme über Stromabwärtskanäle des Netzwerkes zu den vielen Rundfunkempfängern; wobei das Verfahren die nachfolgenden Verfahrensschritte umfasst:

   - das Einfügen von Rundfunkdaten bei wenigstens einem Verteiler, der hierarchisch unter dem zentralen Verteiler liegt, in wenigstens einen Stromaufwärtskanal des Netzwerkes in Richtung des zentralen Verteilers;
   - das Empfangen von Rundfunkdaten über den Stromaufwärtskanal des Netzwerkes; und
   - das Neuverteilen der empfangenen Rundfunkdaten über wenigstens einen Stromabwärtskanal des Netzwerkes.

14. Rundfunkempfänger zur Verwendung in einem Rundfunksystem nach Anspruch 1, wobei der Rundfunkempfänger wirksam ist zum Empfangen von Datenblöcken, ausgesendet über wenigstens einen Stromabwärtskanal des Netzwerkes zur nachfolgenden Wiedergabe; und zum Einfügen von Rundfunkdaten in wenigstens einen Stromaufwärtskanal des Netzwerkes in Richtung eines zentralen Verteilers zur Neuverteilung durch den zentralen Verteiler über wenigstens einen Stromabwärtskanal des Netzwerkes.

15. Rundfunkverteilungscontroller zur Verwendung in einem Rundfunksystem nach Anspruch 1; wobei der Verteilungscontroller wirksam ist zum Steuern synchronisierter Einfügung von Rundfunkdaten in wenigstens einen Stromaufwärtskanal und/oder SubKanal des Rundfunknetzwerkes.

16. Zentraler Rundfunkdatenverteiler zur Verwendung in einem Rundfunksystem nach Anspruch 1, wobei der zentrale Rundfunkdatenverteiler wirksam ist zur Neuaussendung ausgesendeter Daten, die über wenigstens einen Stromaufwärtskanal empfangen worden sind, über wenigstens einen Stromabwärtskanal des Netzwerkes in Richtung einer Anzahl Rundfunkempfänger.

17. Zwischen liegender Rundfunkdatenverteilercontroller zur Verwendung in dem Rundfunksystem nach Anspruch 1, das ein hierarchisches Netzwerk von Datenverteilern aufweist, ausgehend von einem zentralen Verteiler über wenigstens eine Schicht zwischen liegender Rundfunkdatenverteiler zu einer Anzahl Rundfunkempfänger zum Aussenden der Datenströme über Stromabwärtskanäle des Netzwerkes zu der Anzahl Rundfunkempfänger; wobei der zwischen liegende Rundfunkdatenverteiler wirksam ist um Rundfunkdaten in wenigstens einen Stromaufwärtskanal des Netzwerkes in Richtung des zentralen Verteilers zur Neuverteilung der Rundfunkdaten durch den zentralen Verteiler über wenigstens einen Stromabwärtskanal des Netzwerkes einzufügen.

**Revendications**

1. Système de diffusion pour diffuser des données incluant un réseau hiérarchique de distributeurs de données partant d'un distributeur central, passant par au moins une couche de distributeurs intermédiaires et arrivant à une pluralité de récepteurs de diffusion pour diffuser les données à travers des canaux descendants du réseau à la pluralité de récepteurs de diffusion; au moins un distributeur hiérarchiquement en dessous du distributeur central fonctionnant pour insérer des données de diffusion dans au moins un canal montant du réseau vers le distributeur central; le distributeur central étant aménagé pour redistribuer les données de diffusion reçues via au moins un canal montant à travers au moins un canal descendant du réseau.

2. Système de diffusion selon la revendication 1, dans lequel des blocs de données d'un titre sont répartis sur le stockage d'une pluralité de distributeurs pour insertion subséquente comme données de diffusion dans au moins un canal montant.

3. Système de diffusion selon la revendication 2, dans lequel une pluralité de distributeurs dans le stockage desquels le titre est réparti fonctionnent pour insérer des blocs stockés dans au moins un canal de données du réseau sous la commande d'un protocole de distribution commun permettant une réception substantiellement ininterrompue d'une séquences de blocs provenant de la pluralité de distributeurs par des récepteurs de diffusion.

4. Système de diffusion selon la revendication 3, dans lequel au moins deux distributeurs parmi la pluralité des distributeurs fonctionnent pour insérer des blocs stockés dans un sous-canal respectif d'un canal de données.

5. Système de diffusion selon la revendication 3, dans lequel au moins deux distributeurs parmi la pluralité des distributeurs fonctionnent pour insérer des blocs stockés dans des canaux de données différents du réseau.

6. Système de diffusion selon la revendication 3, dans lequel le protocole de distribution commun est un protocole de vidéo quasi à la demande pour distribuer un titre à travers au moins deux canaux de réseaux de débits de répétition différents de blocs assignés au canal; des blocs assignés à un canal de débit de plus haute répétition étant insérés par un premier groupe de distributeurs; et des blocs assignés à un canal de débit de répétition le plus bas étant insérés par un deuxième groupe de distributeurs; les distributeurs du premier groupe étant hiérarchiquement plus hauts que les distributeurs du deuxième groupe.

7. Système de diffusion selon la revendication 1, dans lequel le système de diffusion inclut un contrôleur de distribution pour commander l'insertion de données de diffusion dans les canaux et/ou les sous-canaux montants du réseau.

8. Système de diffusion selon la revendication 7, dans lequel le contrôleur de distribution fonctionne pour fournir des blocs de données à une pluralité de distributeurs pour insertion subséquente dans au moins un canal et/ou sous-canal montants.

9. Système de diffusion selon la revendication 1, dans lequel au moins un récepteur de diffusion fonctionne pour insérer des données de diffusion dans au moins un canal et/ou sous-canal de données montants du réseau.

10. Système de diffusion selon les revendications 2 et 9, dans lequel une pluralité de récepteurs de diffusion fonctionne pour insérer des données de diffusion dans au moins un canal et/ou sous-canal de données montants du réseau; chaque récepteur parmi la pluralité de récepteurs de diffusion incluant un stockage respectif; et un titre étant réparti sur le stockage de la pluralité de récepteurs.

11. Système de diffusion selon la revendication 10, dans lequel le stockage inclut une mémoire à semi-conducteurs.

12. Système de diffusion selon la revendication 1, dans lequel les distributeurs intermédiaires fonctionnent pour répartir et/ou filtrer les données de diffusion vers les récepteurs de diffusion.

13. Procédé de diffusion de séquences de données à travers un réseau hiérarchique de distributeurs de données partant d'un distributeur central, passant par au moins une couche de distributeurs intermédiaires et arrivant à une pluralité de récepteurs de diffusion pour diffuser les séquences de données à travers des canaux descendants du réseau vers une pluralité de récepteurs de diffusion; le procédé incluant:

l'insertion de données de diffusion à au moins un distributeur hiérarchiquement en dessous du distributeur central dans au moins un canal montant du réseau vers le distributeur central;

la réception de données de diffusion via le canal montant du réseau; et

la redistribution des données de diffusion reçues à travers au moins un canal descendant du réseau.

**14.** Récepteur de diffusion pour utilisation dans un système de diffusion selon la revendication 1, dans lequel le récepteur de diffusion fonctionne pour recevoir des blocs de données diffusés à travers au moins un canal descendant du réseau pour rendu subséquent; et pour insérer des données de diffusion dans au moins un canal montant du réseau vers un distributeur central pour redistribution par le distributeur central à travers au moins un canal descendant du réseau.

**15.** Contrôleur de distribution de diffusion pour utilisation dans un système de diffusion selon la revendication 1; le contrôleur de distribution fonctionnant pour commander une insertion synchronisée de données de diffusion dans au moins un canal et/sous-canal montants du réseau de diffusion.

**16.** Distributeur de données de diffusion central pour utilisation dans un système de diffusion selon la revendication 1, le distributeur de données de diffusion central fonctionnant pour rediffuser des données de diffusion reçues via au moins un canal montant à travers au moins un canal descendant du réseau vers une pluralité de récepteurs de diffusion.

**17.** Contrôleur de distributeur de données de diffusion intermédiaire pour utilisation dans le système de diffusion selon la revendication 1 qui inclut un réseau hiérarchique de distributeurs de données commençant à partir d'un distributeur central à travers au moins une couche de distributeurs de données de diffusion intermédiaire vers une pluralité de récepteurs de diffusion pour diffuser les séquences de données à travers des canaux descendants du réseau à une pluralité de récepteurs de diffusion; le distributeur de données de diffusion intermédiaire fonctionnant pour insérer des données de diffusion dans au moins un canal montant du réseau vers le distributeur central pour redistribution des données de diffusion par le distributeur central à travers au moins un canal descendant du réseau.

| | number | homes node |
|---|---|---|
| master headend | 1 | 200,000 |
| x 5 | | |
| metro headend | 5 | 40,000 |
| x 5 | | |
| hub | 25 | 3,000 |
| x 20 | | |
| fiber node | 500 | 400 |
| x 4 | | |
| coax | 2,000 | 100 |
| x 100 | | |
| home | 200,000 | 1 |

**FIG. 1**

**FIG. 2**

EP 1 570 667 B1

channel blocks

| 1 | 1 | 1 1 1 1 1 1 1 1 1 1 1 1 1 1 1 1 1 1 1 1 1 1 1 1 1 1 1 1 1 1 1 1 1 1 1 1 1 1 1 1 1 1 |
| 2 | 2 | 2 3 2 3 2 3 2 3 2 3 2 3 2 3 2 3 2 3 2 3 2 3 2 3 2 3 2 3 2 3 2 3 2 3 2 3 2 3 2 3 2 |
| 3 | 3 | 6 4 5 4 6 4 5 4 6 4 5 4 6 4 5 4 6 4 5 4 6 4 5 4 6 4 5 4 6 4 5 4 6 4 5 4 6 4 5 |
| 4 | 5 | 8 1 7 9 8 0 7 1 8 9 7 0 8 1 7 9 8 0 7 1 8 9 7 0 8 1 7 9 8 0 7 1 8 9 7 |

## FIG. 3A

playout

request

| 1 | 2 3 | 4 5 6 | 7 8 9 0 1 |

1 1 1 1 1 1 1 1 1 1 1 1 1 1 1 1 1 1 1 1 1 1 1 1 1 1 1 1 1 1 1 1 1 1 1 1 1 1 1 1 1 1

2 3 2 3 2 3 2 3 2 3 2 3 2 3 2 3 2 3 2 3 2 3 2 3 2 3 2 3 2 3 2 3 2 3 2 3 2 3 2 3 2

6 4 5 4 6 4 5 4 6 4 5 4 6 4 5 4 6 4 5 4 6 4 5 4 6 4 5 4 6 4 5 4 6 4 5 4 6 4 5

8 1 7 9 8 0 7 1 8 9 7 0 8 1 7 9 8 0 7 1 8 9 7 0 8 1 7 9 8 0 7 1 8 9 7

## FIG. 3B

FIG. 4

sub-channel 1
sub-channel 0
sub-channel 2

merge

channel    blocks

start = 6          end = 17

EP 1 570 667 B1

| 1 | 2 | 3 | 4 | 5 | 6 | 7 | 8 | 9 | 10 | 11 |

from fiber nodes          from homes

## FIG. 5

200,000 homes in total

| | number | homes/node |
|---|---|---|
| master headend | 1 | 200,000 |
| x 5 | | |
| metro headend | 5 | 40,000 |
| x 5 | | |
| Hub | 25 | 8,000 |
| x 20 | | |
| fiber node | 500 | 400 |
| x 4 | | |
| coax | 2,000 | 100 |
| x 100 | | |
| home | 200,000 | 1 |

```
                           55 Gb/s          55 Gb/s

                           11 Gb/s          55 Gb/s

                           11 Gb/s          55 Gb/s

                           2.2 Gb/s         55 Gb/s

                           2.2 Gb/s         55 Gb/s
          60 Mb/s
              110 Mb/s              6 Gb/s
    102 MB       50 Mb/s            6 Gb/s

                  12.5 Mb/s         1.5 Gb/s

                  12.5 Mb/s         1.5 Gb/s
          125 kb/s
              125 kb/s              15 Mb/s
    18.5 MB                  4 GB       5 Mb/s
```

(nicely spread, single storage)          (3 channels
                                          per home in)

## FIG. 6

200,000 homes in total

| | number | homes/node |
|---|---|---|
| master headend | 1 | 200,000 |
| x 5 | | |
| metro headend | 5 | 40,000 |
| x 5 | | |
| Hub | 25 | 8,000 |
| x 20 | | |
| fiber node | 500 | 400 |
| x 4 | | |
| coax | 2,000 | 100 |
| x 100 | | |
| home | 200,000 | 1 |

↑ 55 Gb/s          ↓ 55 Gb/s

↑ 11 Gb/s          ↓ 55 Gb/s

↑ 11 Gb/s          ↓ 55 Gb/s

↑ 2.2 Gb/s         ↓ 55 Gb/s

↑ 2.2 Gb/s         ↓ 55 Gb/s

60 Mb/s   110 Mb/s

50 Mb/s   ↓ 6 Gb/s

102 MB    7.5 GB   ↓ 6 Gb/s

↓ 1.5 Gb/s

↓ 1.5 Gb/s

↓ 15 Mb/s

4 GB    5 Mb/s

(3 channels
per home in)

# FIG. 7

20

FIG. 8